# EUROPEAN PATENT APPLICATION

(11) **EP 1 859 888 A2**
(43) Date of publication of application: **28.11.2007**
(21) Application number: 07108499.0
(22) Date of filing: 18.05.2007
(51) Int. Cl.: B23K 9/20

(54) **Welding workpiece movement sensing system**

(30) Priority: 22.05.2006 US 802459 P; 11.04.2007 US 733921
(71) Applicant: Newfrey LLC, Newark, Delaware 19711 (US)
(72) Inventor: Lame, David L., Huntington Woods, Oakland, MI 48070 (US)
(74) Representative: Haar, Lucas Heinz Jörn

(57) **Abstract**

A stud welding apparatus (100) comprises a welding head control unit (102) including a control valve (104) with built-in electronics for position control on the basis of an input signal. The control valve (104) is connected via a control line (116) to an electric linear motor (114) and to a cylinder (106) on which a stud holder (108) is mounted for holding a stud (110) to be welded to a workpiece (112). The stud welding apparatus (100) is connected via an earth line (120) to the workpiece (112) and via a welding current line (118) to the stud holder (108). A microprocessor controller (122) is connected via a control line (124) to the stud welding apparatus (100), via a measurement line (126) to the workpiece (112), via a measurement line (128) to the stud holder (108), and via a control line (130) to the electric linear motor (114).

## Description

### FIELD

The present disclosure generally relates to welding machines and processes, and relates in particular to techniques for sensing workpiece movement and compensating for workpiece movement in an automated welding apparatus.

### BACKGROUND

The statements in this section merely provide background information related to the present disclosure and may not constitute prior art.

Automated stud welding machines are typically operated by temporarily affixing a metal workpiece to a workpiece holder, and using the stud welding machine to weld studs in one or more locations on the workpiece. The welding machine controller can be trained by an operator moving the welding head of the machine into the locations. The welding head then moves to that location during operation and begins a weld by touching a stud to the surface. The head next applies a current and creates a voltage by drawing the stud away from surface. The stud then liquefies to some degree, and a drop of molten stud material is drawn toward the workpiece surface. The welding head then retouches the stud to the workpiece surface, where it is welded in place.

The quality of each weld depends to some degree and how immobilized the surface of the workpiece is at the welding location. It should be readily understood that workpieces can be of varying shapes, sizes, and thicknesses, and typically need to be clamped to the workpiece holder in several locations for good immobility. Still, some workpieces can be more flexible than others, so obtaining good immobilization is a trial and error process. One in one-thousand bad welds is considered very poor performance in stud welding, but detecting the poor performance requires thousands of trial runs. The, once poor performance is detected, the change in workpiece holding technique likely requires retraining of the welding machine controller, and further trial runs. Meanwhile, finished workpieces that were produced during undetected poor performance may need to be scrapped. Therefore, there is a need to detect workpiece movement more quickly and accurately in order to save time and effort, and improve the overall quality of stud welded workpieces.

An example welding method and related apparatus like that described above is detailed in U.S. Pat. No. 5,977,506 to von Daniken, entitled "Welding Method for the Connection of a Component to a Workpiece, and a Device for Carrying Out the Method." Another example welding method and related apparatus is detailed in U.S. Pub. No. 2004/0217091 A1 to Schmidt et al., entitled "Short-Time Arc-Welding System and Process for Controlling such a System." Still another example welding method and related apparatus is detailed in U.S. Pub. No. 2004/0182828 to Schmidt et al., entitled "Process for Short-Time Arc Welding and Short-Time Arc Welding System." The disclosures of the aforementioned patents are incorporated herein in their entirety for any purpose.

The aforementioned references are notable for various reasons. For example, the von Daniken patent teaches voltage compensation methods. Typically, the lift height (i.e., the distance the stud is lifted from the workpiece surface to create voltage) is changed during the welding process to keep the voltage constant. Also, U.S. Pub. No. 2004/0245221 A1 to Schmitt et al. refers to finding a reference point, which is the point at which the stud contacts the workpiece. This reference covers the method to find that point. Further, U.S. Pub. No. 2004/0182828 A1 to Schmidt et. al. teaches measurement of a voltage curve generated during welding and comparison to an ideal voltage curve in order to detect workpiece movement. This reference employs a template method, in which the voltage at any given time is compared to the desired voltage. Voltages which exceed the tolerance at any given time are considered indications of high frequency disturbances (vibration). In other words, this reference compares the voltage at each time to the ideal voltage at that time.

### SUMMARY

In accordance with the present teachings, a workpiece movement sensing system can be used with an automated stud welding machine and/or process. The system includes a sensor measuring applied voltage relative to lift height utilized during the stud welding process. A workpiece movement detection module detects workpiece movement occurring during one or more welds. Upon detection, an operator can be notified, and/or automatic voltage compensation can be turned on.

The workpiece movement detection system and method in accordance with the present teachings is advantageous over previous workpiece movement detection systems and methods in several ways. For example, some embodiments can detect workpiece movement for a single weld even when the workpiece has moved into contact with the stud before plunge phase begins. Also, some embodiments can detect workpiece movement by comparing several welds, which can detect vibrations that might not trigger detection by comparison of a single weld's voltage curve to an ideal voltage curve. Further, some embodiments can detect workpiece vibration during a pilot phase of a weld and turn on voltage compensation for that weld.

Further areas of applicability will become apparent from the description provided herein. It should be understood that the description and specific examples are intended for purposes of illustration only and are not intended to limit the scope of the present disclosure.

### DRAWINGS

The drawings described herein are for illustration purposes only and are not intended to limit the scope of the present disclosure in any way.

Figure 1 is a block diagram illustrating an automatic stud welding apparatus.

Figure 2 is a two-dimensional graph illustrating sensed voltage and lift height of an automated stud welding machine plotted with respect to time during a stud welding process.

Figure 3 is a flow diagram illustrating a method of operation for a stud welding workpiece movement detection system.

Figure 4 is a table a data structure and user interface output of a stud welding workpiece movement detection system.

### DETAILED DESCRIPTION

The following description is merely exemplary in nature and is not intended to limit the present disclosure, application, or uses.

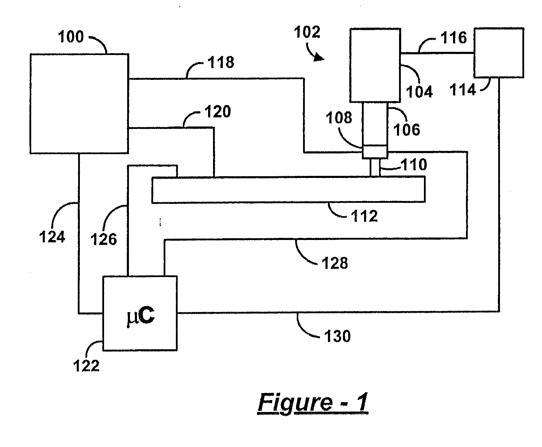

Referring to Figure 1, a component which is to be welded to a workpiece is called a stud, although the invention is not limited to such components. A stud welding apparatus 100 is suitable for the generation of an adjustable welding current during a welding time, which is likewise adjustable. The adjustment can be carried out as a function of the material used and of the weld diameter. A welding head control unit 102 can include a control valve 104 with built-in electronics, which is suitable for carrying out quick and precise position control on the basis of an input signal. The control valve 104 is connected to a cylinder 106 on which a stud holder 108 is mounted, which is suitable for holding a stud 110 which is to be welded to a workpiece 112. Furthermore, the control valve 104 is connected via a control line 116 to an electric linear motor 114. The stud holder 108 is connected via a welding current line 118 to the stud welding apparatus 100. The cylinder 106 is thus used, together with the stud holder 108, as a welding head. The stud welding apparatus 100 is connected via an earth line 120 to the workpiece 112. A microprocessor controller 122 is connected via a control line 124 to the stud welding apparatus 100. Furthermore, the microprocessor controller 122 is connected via a measurement line 126 to the workpiece 112, and via a measurement line 128 to the stud holder 108. Finally, the microprocessor controller 122 is connected via a control line 130 to the electric linear motor 114. The welding head control unit 102 can have a supporting foot for placing the stud 110 precisely onto the workpiece 112. However, the welding head control unit 102 can alternatively be combined with a position measurement system.

In order to weld a stud 110 to a workpiece 112, a reliable electrical contact is initially produced between the stud end and the welding point of the workpiece 112, by placing the stud 110 onto a welding point on the workpiece 112. This null position is measured by means of the position measurement system and is stored in the microprocessor controller 122 as a reference. The welding time and the welding current as well as the desired arc voltage (that is to say the reference voltage profile for the arc voltage control variable during the welding process) and the ratio between the arc voltage and the distance between the stud and the workpiece are set in the microprocessor controller 122 and are passed on via the control line 124 to the stud welding apparatus 100. In addition, further parameters relating to the insertion of the melted stud end into the melted welding point on the workpiece 112 can be adjusted as described in the following text.

The actual welding process is then carried out by lifting the stud 110 off the workpiece 112 and by producing an arc between the stud end and the welding point on the workpiece 112, in order to melt the stud and/or the workpiece. The current arc voltage is measured by the measurement lines 126 and 128, and is compared with the current reference voltage of the set reference voltage profile repeatedly as a controlled variable in a control loop by means of the microprocessor controller 122 throughout the entire welding process.

In some embodiments utilizing voltage compensation, a correction variable in each case can be determined from the difference between the measured arc voltage and the current reference voltage. This correction variable can in each case be fed via the control line 130 to the electric linear motor 114, which in each case produces a corresponding correction to the distance between the stud and the workpiece, by means of the control valve 104, via the control line 116. The distance between the stud and the workpiece is thus in each case automatically corrected as a manipulated variable in the control loop, by converting the determined correction variable by means of the electric linear motor 114 and the control valve 104. The arc voltage is monitored continuously during welding, and the distance between the stud and workpiece is adjusted accordingly several hundred times per second.

The resetting and insertion of the melted stud end into the melted welding point on the workpiece 112 is also detected and controlled via the microprocessor controller 122. On completion of the formation of the arc, the automatic correction of the distance between the stud and the workpiece by means of the control loop is also completed. The last setting of the distance between the stud and the workpiece can measured by means of the position measurement system and stored in the microprocessor controller 122, the stored null position being used as a reference value. The controlled resetting of the distance between the stud and the workpiece and the insertion are now carried out. The insertion depth (also called the insertion dimension) and the rate of insertion can be set in the microprocessor controller 122, the stored null position in each case being used as a reference value. The set values are converted into the insertion dimension and into the rate of insertion by means of the electric linear motor 114, which is combined with the position measurement system. This is in turn done by means of a control loop, the insertion dimension in this case being measured and adapted, on the basis of the predetermined setting values, repeatedly as a controlled variable by means of the position measurement system. In this way, high precision is achieved completely automatically even during the resetting and during insertion, which once again leads to an improvement in the weld quality. After achieving the set maximum insertion depth, a movement back to the null position is carried out again after a resetting time, which is likewise adjustable.

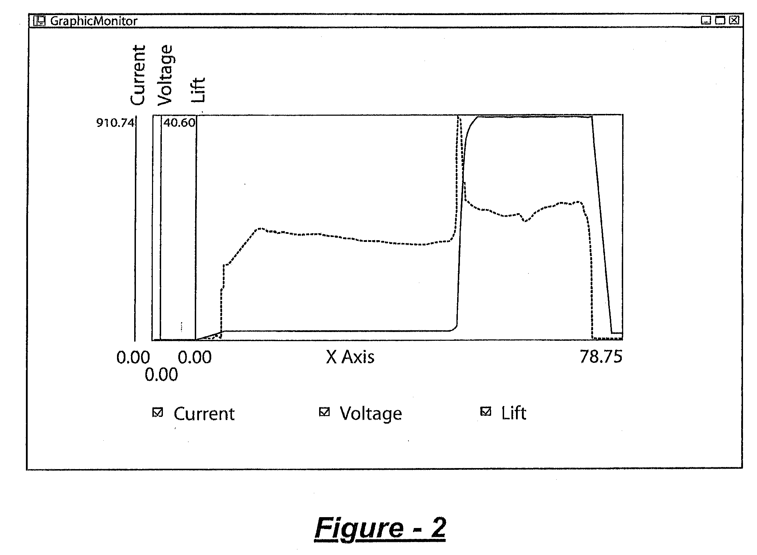

Referring to Figure 2, there is a relationship between voltage 200 and lift height 202 that can be analyzed in order to detect movement of a workpiece during a pilot phase of a stud welding process. In particular, the voltage difference measured between the unit to be welded (the stud) and the workpiece is a function of the distance between the two pieces, and the current used in the welding process. If the position of the workpiece is considered to be 0, the position of the stud from that position can be measured. If the workpiece stays at the initial position, the measured position of the stud from that position will be the distance between the two pieces. This position is referred to as "lift height".

If current and lift height are constant, then voltage should also be constant. The stud welding process begins with a pilot phase, in which the lift height and current are held constant. A vibrating workpiece will have the characteristic that the distance between the stud and the workpiece is changing, even though the position of the stud, the lift height, is constant. The changing distance between the stud and workpiece causes a corresponding change in the voltage.

The characteristic of a vibrating workpiece can be detected by analyzing the voltage. If periodic variation is detected in the measured voltage during a period where lift height and current are constant, the periodic variation can be assumed to be the result of workpiece vibration. The periodic variation in the voltage can be detected through use of the Fourier transform.

The system and method of detecting workpiece movement according to the present invention can be used to detect the need for voltage compensation. This detection can occur in two ways. For example, if workpiece vibration is detected during the pilot phase by use of Fourier transform to detect periodic variation in the voltage, voltage compensation can be automatically turned on individually for each weld performed. Alternatively or additionally, comparing characteristics of multiple welds can reveal excess variation in the lift height measured at the time the arc extinguishes. This excess variation can be used as an indicator that workpiece movement is occurring.

Three options can be employed if excess variation is detected. First, the operator can be warned that the workpiece appears to be improperly secured, and that unacceptable weld variation may result. Second, the operator can be warned that the workpiece is vibrating excessively, and voltage compensation should be employed. Third, voltage compensation can be automatically turned on when that condition is detected.

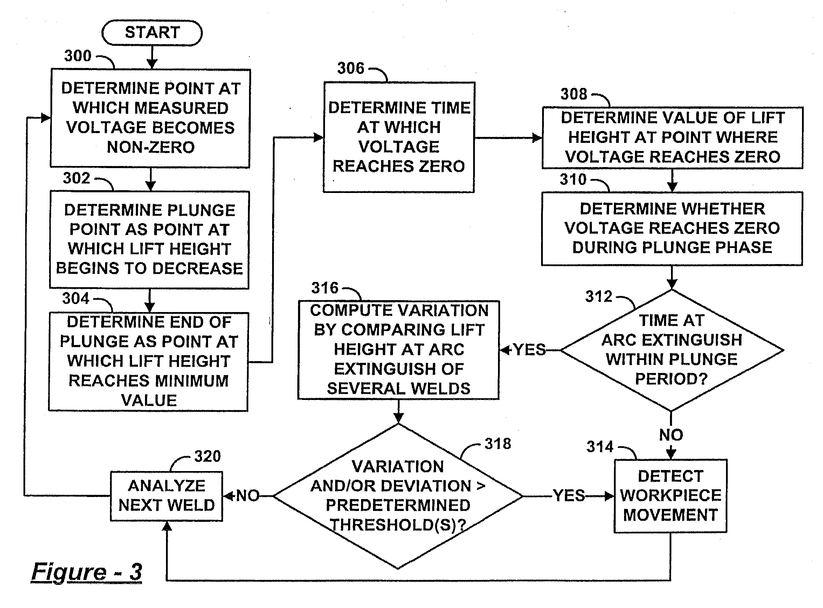

Turning now to Figure 3, the lift height at the time of arc extinguish can be computed based on various inputs that can include two buffers representing the lift height as a function of time, and the voltage as a function of time. Initially, the material to be welded (the stud) is touching the workpiece, so the measured voltage is 0. Then, the point at which the measured voltage becomes non-zero can be determined at step 300; this process determines the point at which the stud lost contact with the workpiece. Next, the point at which the lift height begins to decrease can be determined at step 302; this point is called the plunge. Then, the point at which the lift height reaches its minimum value can be determined at step 304; this point is the end of the plunge. Additional procedures can include determining the time when the voltage reaches 0 at step 306, determining the value of the lift height at the point where the voltage reaches 0 at step 308, and determining whether the voltage reaches 0 during the plunge phase at step 310. If it is determined at decision step 312 that the voltage does not reach 0 during the plunge phase, then it can be assumed that the workpiece has moved into contact with the stud prior to the plunge phase; thus, workpiece movement can be detected at step 314.

If it is determined at decision step 312 that the time at arc extinguish is within the plunge period, several samples of welds can be compared at step 316 in order to compute variation. The lift at the point of arc extinguish should be close to 0 and have very low variation. High variation or values far from 0 can indicate a vibrating workpiece. The exact value of variation or deviation from 0 can be determined experimentally, and can vary depending on the type of material to be welded and the exact welding characteristics, including the current used and the time of the weld. For each combination of current, time, and material, a value of acceptable variation and/or deviation can be determined experimentally. If that variation or deviation is exceeded at decision step 318, the workpiece can be assumed to be vibrating; thus, workpiece movement can be detected at step 314. It should be readily understood that the process upon initialization can skip steps 316 and 318 for a few iterations until enough welds have been performed for a comparison to be made.

As discussed above, various responses can be taken as a result of detection of workpiece movement at step 314, including notifying an operator of detection of workpiece movement, and/or automatic voltage compensation. In the case of operator notification, the stud welding process may be paused until and if the operator selects to resume the stud welding process. However, it should be readily understood that the stud welding process can be implemented to continue even when workpiece movement is detected. Accordingly, the workpiece movement sensing process can resume analyzing the next weld at step 320, especially when workpiece movement is not detected, and even when workpiece movement is detected. It should also be readily understood that movement detection can be tabulated and used for purposes of inspection of welds during a quality control procedure.

The following pseudo code demonstrates suitable machine code instructions for carrying out the workpiece movement sensing process:

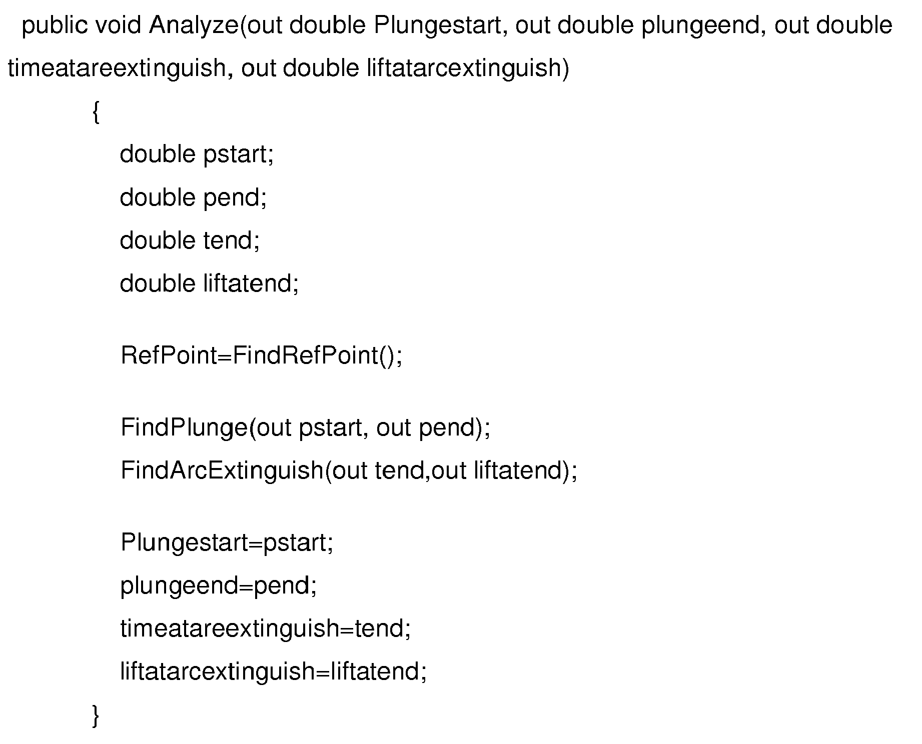

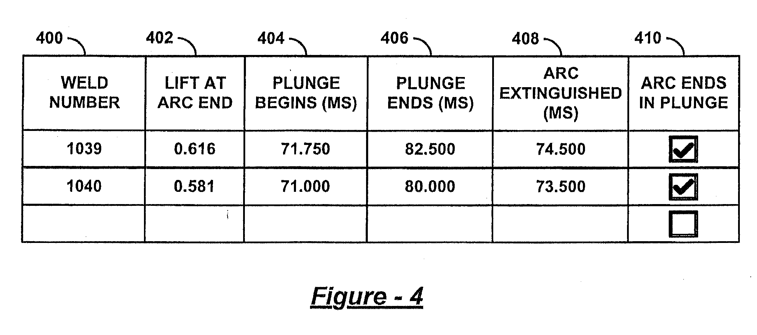

In the above pseudocode, the function FindRefPoint corresponds to step 300 of the detection process. The function FindPlunge corresponds to steps 302 and 304 of the detection process. The function FindArcExtinguish corresponds to steps 306 and 308 of the process. Comparing the timeatarcextinguish to PlungeStart and PlungeEnd corresponds to step 310. Steps 312-318 correspond to computation of the table illustrated in Figure 4. Statistics of the liftatarcextinguished variable, which is recorded as lift at arc end at 304, can be used to determine the extent of sample to sample variation. The computed data can be tabulated by weld number 400, and can additionally include the time the plunge begins 404, the time the plunge ends 406, the time the arc is extinguished 408, and whether the arc ends in the plunge phase 410.

It should be readily understood that outputting the tabulated data to an operator allows the operator to experimentally determine the proper thresholds and perform the statistical analyses at steps 316 and 318, and therefore detect workpiece movement at step 314. It is also envisioned that steps 316 and 318 can be automated, especially once the proper thresholds are determined, allowing for various types of actions to be taken in an automated fashion upon detection of workpiece movement.

## Claims

1. A workpiece movement sensing system for use with an automated stud welding process, the system comprising:
a sensor measuring applied voltage relative to lift height utilized during a stud welding process; and
a workpiece movement detection module detecting workpiece movement occurring during at least one weld by at least one of:
(a) determining whether a time of arc extinguish occurs during a plunge period;
(b) comparing lift height at arc end of multiple welds including the weld, and observing at least one of excess variation or deviation respective of at least one predetermined threshold; or
(c) detecting periodic variation in the applied voltage during at least a portion of the weld in which the lift height and applied current are held constant.

2. The system of claim 1, wherein said workpiece movement detection module detects the periodic variation in the voltage through use of a Fourier transform.

3. The system of anyone of claims 1 and 2, wherein said workpiece movement detection module finds a reference point as a point at which measured voltage becomes non-zero.

4. The system of anyone of the preceding claims, wherein said workpiece movement detection module determines a plunge point as a point at which the lift height begins to decrease.

5. The system of anyone of the preceding claims, wherein said workpiece movement detection module determines an end of plunge as a point at which the lift height reaches its minimum value.

6. The system of anyone of the preceding claims, wherein said workpiece movement detection module determines a time at which the voltage reaches zero.

7. The system of anyone of the preceding claims, wherein said workpiece movement detection module determines a value of the lift height at a point where the voltage reaches zero.

8. The system of anyone of the preceding claims, wherein said workpiece movement detection module determines whether the voltage reaches zero during the plunge period.

9. The system of anyone of the preceding claims, wherein said workpiece movement detection module determines that workpiece movement has occurred if the time of arc extinguish does not lie within the plunge period.

10. The system of anyone of the preceding claims, wherein the threshold utilized by said workpiece movement detection module has been experimentally determined for a combination of current, time, and material.

11. The system of anyone of the preceding claims, wherein said workpiece movement detection module records data in a computer-readable medium for at least one weld, including at least one of a lift at arc end, a time when a plunge begins, a time when the plunge ends, the time of arc extinguish, or whether the time at arc extinguish occurs during the plunge period.

12. The system of claim 11, further comprising a user interface communicating at least part of the data to an operator of a stud welding machine during the stud welding process.

13. The system of anyone of the preceding claims, further comprising a user interface notifying an operator of a stud welding machine that workpiece movement has been detected.

14. The system of anyone of the preceding claims, further comprising a control module turning on automatic voltage compensation upon detection of workpiece movement.

15. A workpiece movement sensing method for use with an automated stud welding process, the method comprising:
measuring applied voltage relative to lift height utilized during a stud welding process; and
detecting workpiece movement occurring during at least one weld by at least one of:
(a) determining whether a time of arc extinguish occurs during a plunge period;
(b) comparing lift height at arc end of multiple welds including the weld and observing at least one of excess variation or deviation respective of at least one predetermined threshold; or
(c) detecting periodic variation in the applied voltage during at least a portion of the weld in which the lift height and applied current are held constant.

16. The method of claim 15, further comprising detecting the periodic variation in the voltage through use of a Fourier transform.

17. The method of anyone of claims 15 and 16, further comprising finding a reference point as a point at which measured voltage becomes non-zero.

18. The method of anyone of claims 15 to 17, further comprising determining a plunge point as a point at which the lift height begins to decrease.

19. The method of anyone of claims 15 to 18, further comprising determining an end of plunge as a point at which the lift height reaches its minimum value.

20. The method of anyone of claims 15 to 19, further comprising determining a time at which the voltage reaches zero.

21. The method of anyone of claims 15 to 20, further comprising determining a value of the lift height at a point where the voltage reaches zero.

22. The method of anyone of claims 15 to 21, further comprising determining whether the voltage reaches zero during the plunge period.

23. The method of anyone of claims 15 to 22, further comprising determining that workpiece movement has occurred if the time of arc extinguish does not lie within the plunge period.

24. The method of anyone of claims 15 to 23, further comprising experimentally determining the threshold for a combination of current, time, and material.

25. The method of anyone of claims 15 to 24, further comprising recording data in a computer-readable medium for at least one weld including at least one of a lift at arc end, a time when a plunge begins, a time when the plunge ends, the time of arc extinguish, or whether the time at arc extinguish occurs during the plunge period.

26. The method of claim 25, further comprising communicating at least part of the data to an operator of a stud welding machine during the stud welding process.

27. The method of anyone of claims 15 to 26, further comprising notifying an operator of a stud welding machine that workpiece movement has been detected.

28. The method of anyone of claims 15 to 27, further comprising turning on automatic voltage compensation upon detection of workpiece movement.

29. An automated stud welding apparatus, comprising:
a sensor measuring applied voltage relative to lift height utilized during a stud welding process; and
a workpiece movement detection module detecting workpiece movement occurring during at least one weld by determining whether a time of arc extinguish occurs during a plunge period.

30. An automated stud welding apparatus, comprising:
a sensor measuring applied voltage relative to lift height utilized during a stud welding process; and
a workpiece movement detection module detecting workpiece movement occurring during at least one weld by comparing lift height at arc end of multiple welds including the weld, and observing at least one of excess variation or deviation respective of at least one predetermined threshold.

31. The apparatus of anyone of claims 29 and 30, wherein said workpiece movement detection module finds a reference point as a point at which measured voltage becomes non-zero.

32. The apparatus of anyone of claims 29 to 31, wherein said workpiece movement detection module determines a plunge point as a point at which the lift height begins to decrease.

33. The apparatus of anyone of claims 29 to 32, wherein said workpiece movement detection module determines an end of plunge as a point at which the lift height reaches its minimum value.

34. The apparatus of anyone of claims 29 to 33, wherein said workpiece movement detection module determines a time at which the voltage reaches zero.

35. The apparatus of anyone of claims 29 to 34, wherein said workpiece movement detection module determines a value of the lift height at a point where the voltage reaches zero.

36. The apparatus of anyone of claims 29 to 35, wherein said workpiece movement detection module determines whether the voltage reaches zero during the plunge period.

37. The apparatus of anyone of claims 29 to 36, wherein said workpiece movement detection module determines that workpiece movement has occurred if the time of arc extinguish does not lie within the plunge period.

38. The apparatus of anyone of claims 29 to 37, wherein said workpiece movement detection module records data in a computer-readable medium for at least one weld, including at least one of a lift at arc end, a time when a plunge begins, a time when the plunge ends, the time of arc extinguish, or whether the time at arc extinguish occurs during the plunge period.

39. The apparatus of claim 38, further comprising a user interface communicating at least part of the data to an operator of the stud welding apparatus during a stud welding process.

40. The apparatus of anyone of claims 29 to 39, further comprising a user interface notifying an operator of the stud welding apparatus that workpiece movement has been detected.

41. The apparatus of anyone of claims 29 to 40, further comprising a control module turning on automatic voltage compensation upon detection of workpiece movement.

42. The apparatus of anyone of claims 29 to 41, wherein the threshold utilized by said workpiece movement detection module has been experimentally determined for a combination of current, time, and material.

43. An automated stud welding apparatus, comprising:
a sensor measuring applied voltage relative to lift height utilized during a stud welding process; and
a workpiece movement detection module detecting workpiece movement occurring during at least one weld by detecting periodic variation in the applied voltage during at least a portion of the weld in which the lift height and applied current are held constant.

44. The apparatus of claim 43, wherein said workpiece movement detection module detects the periodic variation in the voltage through use of a Fourier transform.

45. The apparatus of anyone of claims 43 and 44, further comprising a user interface notifying an operator of a stud welding machine that workpiece movement has been detected.

46. The apparatus of claims 43 to 45, further comprising a control module turning on automatic voltage compensation upon detection of workpiece movement.
